# EUROPÄISCHE PATENTANMELDUNG

(11) **EP 2 840 288 A2**
(43) Veröffentlichungstag der Anmeldung: **25.02.2015**
(21) Anmeldenummer: 14172829.5
(22) Anmeldetag: 17.06.2014
(51) Int. Cl.: F16K 37/00, F16K 17/16

(54) **Verfahren und Vorrichtung zur Überwachung einer Berstscheibe**

(30) Priorität: 20.08.2013 DE 102013108989
(71) Anmelder: Montwill GmbH, 51469 Bergisch Gladbach (DE)
(72) Erfinder: Wessel, Dirk, 51069 Köln (DE)
(74) Vertreter: Graefe, Jörg

(57) **Zusammenfassung**

Die Erfindung betrifft ein Verfahren zur Überwachung einer Berstscheibe (2b), insbesondere zum berühungslosen Feststellen einer Deformation einer Berstscheibe (2b) vor einem Bersten, wobei die Berstscheibe (2b) durch ein Fluid, welches aus einer Austrittsöffnung (4a) einer Fluidleitung (4) austritt, angeströmt wird. Die Änderung des Strömungswiderstands an der Anströmstelle und dem vorhandenen Spalt ist proportional zur Deformation der Berstscheibe und enthält eine qualitative Aussage über deren Zustand. Durch die Möglichkeit den Strömungswiderstand im Auslieferungszustand einzuprägen, ist eine Manipulation bzw. Fehlfunktion dieser Sicherheitseinrichtung weiter minimiert.

## Beschreibung

Die vorliegende Erfindung betrifft ein Verfahren zur Überwachung einer Berstscheibe, insbesondere zum Feststellen einer Deformation einer Berstscheibe vor einem Bersten. Die Erfindung betrifft ferner eine Vorrichtung zur Überwachung einer Berstscheibe, insbesondere zum Feststellen einer Deformation einer Berstscheibe vor einem Bersten sowie eine Anordnung umfassend eine Berstscheibe und eine Vorrichtung zur Überwachung der Berstscheibe.

Berstscheiben sind Drucksicherungen, die einen Behälter oder ein System vor schädigendem Über- oder Unterdruck schützen, indem eine Einmal-Membran zerbirst.

Aus dem Dokument DE 20 56 167 C3 ist eine Überwachungsvorrichtung für Umkehrberstscheiben zum Schutz einer Anlage vor Überdruck bekannt. Die Überwachungsvorrichtung erlaubt es zwischen zwei Schadensfällen zu unterscheiden und gegebenenfalls Maßnahmen einzuleiten. In einem ersten Fall ist die Berstscheibe geborsten und hat dadurch eine Druckentlastung ermöglicht. In einem zweiten Fall ist Berstscheibe umgeklappt aber noch nicht geborsten.

Die aus dem Dokument DE 20 56 167 C3 bekannte Überwachungsvorrichtung weist zwei Sensoren auf. Beide Sensoren sind aus Blickrichtung des zu sichernden Behälters hinter der Berstscheibe angeordnet. Ein erster Sensor ist in einem Bereich angeordnet, der von der Berstscheibe beim Umklappen überstrichen wird. Ein zweiter Sensor ist außerhalb dieses Bereiches angeordnet.

Mit dem ersten Sensor kann das Umklappen der Berstscheibe erkannt werden. Der zweite Sensor spricht dagegen nur an, wenn die Berstscheibe birst und ein Medium, das durch die Berstscheibe nach außen strömt, den Bereich, in welchem der zweite Sensor angeordnet ist, durchströmt.

Da das Umklappen der Berstscheibe dem Bersten notwendigerweise vorausgeht und das Umklappen und das Bersten zeitlich voneinander entkoppelt stattfinden können, dass heißt, dass das Umklappen nicht unmittelbar das Bersten zur Folge haben muss, ist es möglich, nach dem Feststellen des Umklappens mittels des ersten Sensors Maßnahmen einzuleiten, um einen Entlastungsfall zu verhindern bzw. unnötig werden zu lassen.

Das Umklappen als Vorstufe zum Bersten kann nur bei einer Umkehrberstscheibe detektiert werden. Bei einer in Entlastungsrichtung vorgewölbten Berstscheibe ist eine derartige Detektion nicht möglich. Bei einer solchen Berstscheibe kann daher auf diese Weise keine Maßnahme zur Verhinderung des Entlastungsfalls eingeleitet werden. Auch bei einer Umkehrberstscheibe ist nicht gesichert, dass Maßnahmen gegen den Entlastungsfall eingeleitet werden können. Das ist immer dann unmöglich, wenn das Umklappen und das Bersten in so kurzer Folge aufeinander stattfinden, dass nicht genügend Zeit für die Einleitung von Gegenmaßnahmen bleibt.

Der Erfindung lagen daher die Aufgaben zu Grunde ein Verfahren zur Überwachung einer Berstscheibe und eine Überwachungsvorrichtung vorzuschlagen, die für Berstscheiben aller Art geeignet sind und bei Umkehrberstscheiben schon vor dem Umklappen eine Druckerhöhung detektieren können.

Diese Aufgaben werden erfindungsgemäß durch ein Verfahren nach Anspruch 1 und eine Überwachungsvorrichtung nach Anspruch 6 gelöst. Weiterbildungen der in diesen beiden Ansprüchen genannten Erfindungen sind in den davon abhängigen Ansprüchen angegeben. In Anspruch 10 und in dem davon abhängigen Anspruch ist eine Anordung aus einer Berstscheibe und einer erfindungsgemäßen Überwachungsvorrichtung angegeben.

Grundlage des hinter den erfindungsgemäßen Lösungen stehenden Gedankens ist die Beobachtung, dass vor einem Bersten oder ggf. einem Umklappen einer Berstscheibe der Druck in dem zu sichernden Behälter oder in der zu sichernden Leitung zu einer Deformation der Berstscheibe führt. Die Deformation kann zu einer Bewegung des später berstenden Bereichs der Berstscheibe nach außen führen. Diese Bewegung kann nun erfindungsgemäß dadurch beobachtet werden, dass die Austrittsöffnung der Fluidleitung vor der Berstscheibe angeordnet wird. Zur Überwachung der Berstscheibe tritt nun durch die Austrittsöffnung kontinuierlich das Fluid aus und strömt die Berstscheibe an. Durch eine Deformation der Berstscheibe ändert sich der Abstand zwischen der Austrittöffnung und der Berstscheibe. In der Regel wird sich der Abstand zwischen der Austrittsöffnung und der Berstscheibe verkürzen. Die Abstandsänderung bewirkt eine Änderung des Strömungswiderstands an der Austrittsöffnung und führt so zu einem geänderten Strömungsverhalten des Fluids, das messtechnisch erfasst werden kann. Das geänderte Strömungsverhalten kann zu einem geänderten statischen oder dynamischen Druck in der Fluidleitung, zu einem geänderten Gesamtdruck und/oder geänderten Druckabfall und/oder zu geänderten Strömungsgeschwindigkeiten führen, die ausgewertet und interpretiert werden können. Auch die Änderungen als solche können Aussagen zu dem Zustand der Berstscheibe bzw. zu deren Deformation ermöglichen.

Dadurch das es möglich ist, die dem Entlastungsfall vorausgehende Deformation der Berstscheibe zu erkennen, können in vielen Fällen rechtzeitig vor dem Bersten Gegenmaßnahmen zur Verhinderung des Entlastungsfalls vorgenommen werden.

Das Fluid strömt über die Zuführungsleitung auf den Spalt zwischen Berstscheibe und Leitungsaustritt zu. Die damit verbundene Querschnittsrelation vom Strömungsquerschnitt im Spalt zum Querschnitt der Zuleitung und die Richtungsänderung des Fluids ergeben einen Strömungswiderstand an der Messstelle. Deshalb ist bei der Positionierung die zu detektierende Verformung an der Berstscheibe relevant. Bei kleineren Berstscheiben wird man in der Regel die Strömung auf die Mitte des Kegels ausrichten, an dem die Verformung in Relation zum überwachenden Druck am höchsten ist. Der Kegel ist entweder schon bei der Produktion der Berstscheibe ausgebildet worden oder durch die Beaufschlagung der Berstscheibe mit Druck entstanden. Ein bei der Produktion ausgebildeter Kegel kann durch die Druckbeauschlagung der Berstscheibe vergrößert werden.

Der Abstand und die Position der Anströmung ist immer so zu wählen, dass die Überwachungseinrichtung die Auslösecharakteristik der Berstscheibe über eine mechanische Berührung nicht verändern kann. Es ist denkbar bei sehr großen Berstscheiben aus Sicherheitsgründen diese an mehreren, unterschiedlichen Stellen anzuströmen.
Da der Umfang des Fluidaustritts im Spalt möglichst gering und die Richtungsänderung groß sein soll, ist dieser im Regelfall annähernd 90° Winkel zur gewölbten Berstscheibeoberfläche auszurichten. Durch diese Technik können sich geringe Verformungen von wenigen 1/10 mm detektieren lassen.

Die Verformung einer Berstscheibe bei Druckbeaufschlagung erfolgt bei geringem Druckanstieg zunächst reversibel. D.h., dass sich die Verformung nach einer Entlastung der Berstscheibe vom Druck zurückbildet. Die Verformung der Berstscheibe erlaubt bei einer reversiblen Verformung einen Schluss auf die aktuelle Druckbeaufschlagung. Nachdem eine bestimmte Grenze der Verformung überschritten wurden, tritt eine irreversible Verformung der Berstscheibe ein. D.h., die Verformung bildet sich nach einer Entlastung nicht mehr zurück. Eine Aussage über einen aktuell geringeren Druck ist nach Eintritt der irreversiblen Verformung nicht mehr möglich. Es ist dann allerdings eine Aussage über den maximal aufgetretenen Druck möglich, der die Berstscheibe belastet hat. Bei einer Aussage über den maximalen Druck muss allerdings geprüft werden, ob die Länge der Einwirkzeit eines Drucks jenseits der vorgenannten Grenze einen Einfluss auf die dauerhafte Verformung hat. Es hat sich nämlich herausgestellt, dass eine lange Einwirkzeit eines Drucks, der nur ein wenig über der Grenze liegt, ab dem sich eine irreversible Verformung einstellt, zu der Verformung der Berstscheibe führen kann, wie ein höherer Druck, der nur sehr kurze Zeit einwirkt. Es kann daher sinnvoll sein, den zeitlichen Verlauf der Verformung aufzuzeichnen und/oder auszuwerten.

Da das Messprinzip oder Überwachungsprinzip darauf beruht, dass die Verformung bzw. Abstandsänderung zwischen der Austrittöffnung und der Berstscheibe eine Aussage über den Druck in dem durch die Berstscheibe gesicherten Behälter oder in der durch die Berstscheibe gesicherten Rohrleitung überwacht wird und die Abstandsänderung durch die Verformung der Berstscheibe hervorgerufen wird, die wiederum, was ohne weitere Erläuterungen offensichtlich sein dürfte, von den Eigenschaften der Berstscheibe abhängt, wird schnell klar, dass vergleichbare Ergebnisse nur bei Berstscheiben mit gleichen Eigenschaften erzielt werden können. Berstscheiben mit anderen Eigenschaften werden sich anders Verhalten.
Diese Verhaltensunterschiede und die Auslegung bzw. Ausführung der Fluidleitung im Bereich der Berstscheibe erlaubt es, durch dass erfindungsgemäße Verfahren auch zu überwachen, ob die richtige Berstscheibe eingesetzt wird oder ob, sei es wegen Fahrlässigkeit oder vorsätzlich, eine Berstscheibe eines anderen Typs eingesetzt ist.

Zur messtechnischen Erfassung kann eine Messbrücke benutzt werden, die aus Strömungswiderständen aufgebaut ist und vom Prinzip wie eine aus der Elektrotechnik bekannte Wheatstone-Brücke funktioniert. Vier Strömungswiderstände bilden diese Messbrücke, von denen einer im wesentlichen durch den Strömungswiderstand an der Austrittsöffnung und der Auslegung des Fluidleiters vor der Berstscheibe gebildet wird. Der Widerstand an der Austrittsöffnung ist variabel und abhängig von der Deformation der Berstscheibe. Die anderen Strömungswiderstände sind vorzugsweise konstant. Je zwei Strömungswiderstände sind in Reihe hintereinander angeordnet. Die Verbindungspunkte zwischen den beiden Widerständen der Reihenschaltungen sind mit einem Differenzdrucksensor verbunden. Dieser Differenzdrucksensor misst den sich aufgrund der Widerstandsänderung an der Austrittsöffnung ändernden Differenzdruck zwischen den Verbindungspunkten der Reihenschaltungen.

Das für das Verfahren verwendete Fluid kann ein Gas sein. Besonders geeignet kann Luft sein, die kostenlos zur Verfügung steht und vor Ort komprimiert werden kann, um eine Strömung zu erzeugen. Bei besonderen Anlagen, wie in einer ATEX-Umgebung, kann es von Vorteil sein, wenn ein nicht brennbares oder inertes Gas verwendet wird. Unter Wasser kann direkt über eine Turbine das umgebende Medium beschleunigt und die daraus entstehende Strömung entsprechend auf eine zu überwachende Berstscheibe (z.B. einer Pipeline) ausgerichtet werden.

Eine erfindungsgemäße Vorrichtung kann eine Messeinrichtung umfassen, mit welcher der statische Druck, der dynamische Druck, der Druckabfall, der Gesamtdruck und/oder die Geschwindigkeit des Fluids und/oder eine Veränderung der vorgenannten Größen messtechnisch erfasst werden kann.

Die Messeinrichtung einer erfindungsgemäßen Vorrichtung kann ein Auswertemittel aufweisen, welches die messtechnisch erfassten Größen auswertet und in eine Größe wandelt, welche eine Deformation der Berstscheibe oder einen auf der Berstscheibe lastenden Druck angibt. Bei dieser Größe kann es sich um eine elektrische Größe handeln.

Mit der Erfindung lässt sich nur eine Deformation aufgrund eines erhöhten Innendrucks des zu sichernden Behälters erfassen. Es ist möglich, dass aufgrund von Alterung, Materialermüdung oder dergleichen eine irreguläre Deformation der Berstscheibe stattfindet, obwohl der Innendruck im Normalbereich liegt, in dem keine Störungen zu erwarten sind. Diese Deformationen können dann den Benutzer der Berstscheibe veranlassen, die Berstscheiben zu erneuern, bevor diese wegen Alterung, Materialermüdung oder dergleichen versagt und eine unnötige Druckentlastung stattfindet.

Weitere Merkmale und Vorteile der vorliegenden Erfindung werden deutlich anhand der nachfolgenden Beschreibung unter Bezugnahme auf die beiliegenden Abbildungen. Darin zeigen
- Fig. 1: in schematischer Darstellung einen Schnitt durch eine erfindungsgemäße Anordnung und

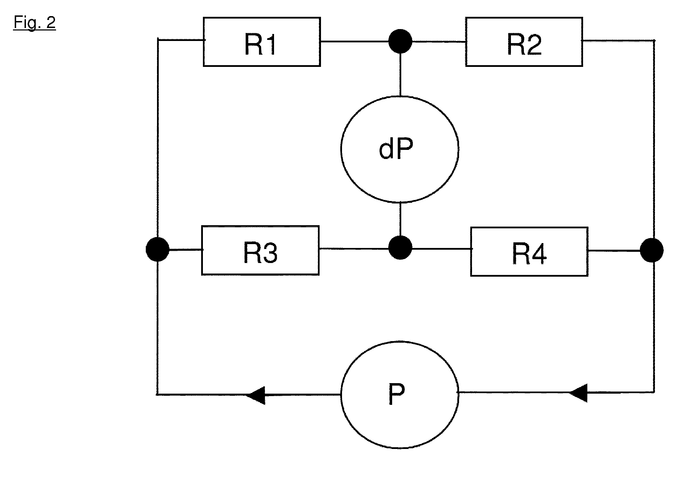

- Fig. 2: in schematischer Darstellung ein Ersatzschaltbild einer Messbrücke einer erfindungsgemäßen Überwachungsvorrichtung.

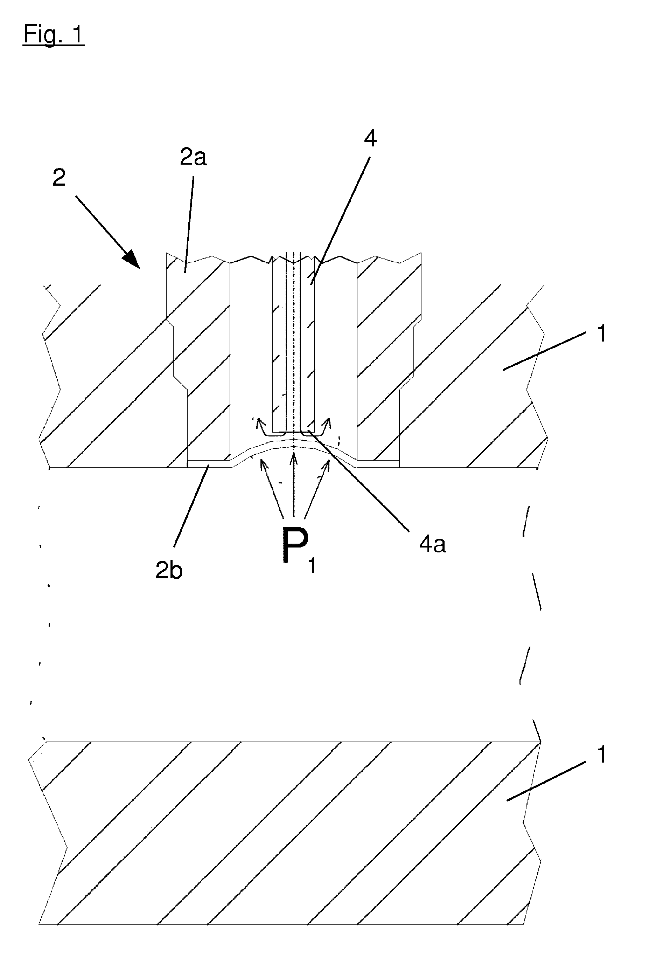

Die in der Fig. 1 dargestellte erfindungsgemäße Anordnung ist Teil eines Extruders, mit dem z.B. Kunststoffprofile gepresst werden. Dargestellt ist ein Teil des Gehäuses 1. In einer Bohrung in dem Gehäuse ist ein sogenannter Berstschraube bzw. Extruder-Berstscheibe 2 eingesetzt, vorzugsweise eingeschraubt, der zumindest aus einer Trägerschraube 2a und angeschweißten Berstscheibe 2b besteht.

Der Extruder, mit dem die Profile gepresst werden, wird durch die Berstscheibe gegen einen zu hohen Druck des in der Schnecke des Extruders verarbeiteten heißen Kunststoffs überwacht. Dazu wird eine Fluidleitung, im vorliegenden Fall handelt es sich um ein Röhrchen 4, ein Fluid, z. B. Druckluft auf die Berstscheiben ausgerichtet. Die Fluidleitung hat eine Austrittsöffnung 4a, die zumindest im Betrieb des Extruders bei Nenndruck einen Abstand zur Berstscheibe hat, damit das Fluid aus der Fluidleitung austreten kann.

Durch den komprimierten Kunststoff tritt eine Verformung der Scheibe auf, die teils reversibel und teils irreversibel ist. Die Verformung ist reproduzierbar und vom zu überwachenden Druck im Gehäuse des Extruders abhängig. Mit steigendem Druck ist die Verformung der Berstscheibe stärker, wodurch sich der Abstand zwischen der Austrittsöffnung 4a und Bertscheibe 2b verkleinert. Dadurch erhöht sich der Strömungswiderstand an der Austrittsöffnung 4a. Über den Strömungswiderstand lässt sich auf den Mediendruck im Extruder schließen. So lässt sich ein Druck feststellen, bei dem die Berstscheibe vor dem Reißen steht oder ein nicht gewünschter Anlagendruck erreicht ist. Dann kann eine Warnung ergehen und Maßnahmen zur Reduzierung des Druckes können eingeleitet werden. Mit dieser Vorwarnung lassen sich Anlagenteile effektiver vor längeren Produktionsausfällen durch Reinigung oder Personen vor heißem austretendem Kunststoff schützen.

Durch die Verformung der Berstscheibe an der Messstelle verändert sich der Strömungswiderstand an der Austrittsöffnung 4a, an der das Fluid auf die Berstscheibe 2b trifft. Die Änderung des Strömungswiderstands lässt sich am präzisesten durch das auf Strömungswiderstände übertragene Prinzip der Wheatstoneschen Messbrücke erfassen. Die Messbrücke weist Strömungswiderstände R1, R2, R3, R4 auf, wobei einer davon an der Austrittöffnung 4a vorgesehen ist. Die Strömungswiderstände bilden zwei Halbbrücken R1, R2 bzw. R3, R4. Aus einer Quelle P steht das komprimierte Fluid zur Verfügung. Bei Druckluft wäre die Speisung ein Druckregler und die Rückleitung der Umgebungsdruck. Der Differenzdruck dP wird zwischen den Halbbrücken R1, R2; R3, R4 erfasst. Gute Ergebnisse werden erreicht, wenn alle Strömungswiderstände R1, R2, R3, R4 etwa die gleiche Größe haben. Dann kann der Differenzdruck dP besonders genau aufgelöst werden.

Die definierten Strömungswiderstände können durch den Querschnitt von Luftkanälen oder Bohrungen in Blenden erzeugt werden.

## Patentansprüche

1. Verfahren zur Überwachung einer Berstscheibe (2b), insbesondere zum Feststellen einer Deformation einer Berstscheibe (2b) vor einem Bersten, **gekennzeichnet durch** das Anströmen der Berstscheibe (2b) **durch** ein Fluid, welches aus einer Austrittsöffnung (4a) einer Fluidleitung (4) austritt.

2. Verfahren nach Anspruch 1, **dadurch gekennzeichnet, dass** das Fluid auf die Berstscheibe (2b) ausgerichtet ist und zwischen Berstscheibe und Austrittsöffnung der Fluidleitung ein Spalt vorhanden ist.

3. Verfahren nach Anspruch 1 oder 2, **dadurch gekennzeichnet, dass** Messwerte eines statischen Drucks, eines dynamischen Drucks, eines Gesamtdrucks, eines Druckabfalls und/oder einer Geschwindigkeit des Fluids und/oder eine Veränderung der vorgenannten Größen messtechnisch erfasst werden.

4. Verfahren nach Anspruch 3, **dadurch gekennzeichnet, dass** zur messtechnischen Erfassung eine Messbrücke (R1, R2, R3, R4) benutzt wird.

5. Verfahren nach einem der Ansprüche 1 bis 4, **dadurch gekennzeichnet, dass** das Fluid ein Gas oder Flüssigkeit, insbesondere Luft oder Wasser ist.

6. Vorrichtung zur Überwachung einer Berstscheibe (2b), **dadurch gekennzeichnet, dass** die Vorrichtung eine Fluidleitung mit einer Austrittsöffnung (4a) aufweist, welche so vor einer Berstscheibe (2b) montierbar ist, dass die Berstscheibe (2b) anströmbar ist.

7. Vorrichtung nach Anspruch 6, **dadurch gekennzeichnet, dass** die Vorrichtung eine Messeinrichtung umfasst, mit welcher ein statischer Druck, ein dynamischer Druck, ein Gesamtdruck, ein Druckabfall und/oder eine Geschwindigkeit des Fluids und/oder eine Veränderung der vorgenannten Größen messtechnisch erfassbar ist.

8. Vorrichtung nach Anspruch 7, **dadurch gekennzeichnet, dass** die Messeinrichtung eine Messbrücke aufweist, die aus Strömungswiderständen aufgebaut ist und die einen Strömungswiderstand als Fluidleitung aufweist, mit welcher die Berstscheibe (2b) anströmbar ist.

9. Vorrichtung nach Anspruch 7 oder 8, **dadurch gekennzeichnet, dass** die Messeinrichtung Auswertemittel aufweist, welche die messtechnisch erfassten Größen auswertet und in eine Größe wandelt, welche eine Deformation der Berstscheibe (2b) oder einen auf der Berstscheibe (2b) lastenden Druck oder aufgetretenen Maximaldruck angibt.

10. Anordnung aus einer Berstscheibe (2b) und einer Vorrichtung zur Überwachung der Berstscheibe (2b), **dadurch gekennzeichnet, dass** die Vorrichtung zur Überwachung einer Berstscheibe (2b) nach einem der Ansprüche 6 bis 9 ausgebildet ist.

11. Anordnung nach Anspruch 10, **dadurch gekennzeichnet, dass** die Austrittsöffnung der Fluidleitung so auf die Berstscheibe (2b) ausgerichtet ist, dass die Berstscheibe (2b) anströmbar ist und ein Spalt zwischen Austrittsöffnung der Fluidleitung und Berstscheibe vorhanden ist.
